# EUROPÄISCHE PATENTANMELDUNG

(11) **EP 2 476 939 A2**
(43) Veröffentlichungstag der Anmeldung: **18.07.2012**
(21) Anmeldenummer: 12150778.4
(22) Anmeldetag: 11.01.2012
(51) Int. Cl.: F16L 33/22, F16L 37/138

(54) **Anschlussverbinder zum Anschließen eines Rohrendes**

(30) Priorität: 12.01.2011 DE 202011000062 U
(71) Anmelder: Beulco GmbH & Co. KG, 57439 Attendorn (DE)
(72) Erfinder: Pülmanns, Gerhard, 47918 Tönisvorst (DE)
(74) Vertreter: Haverkamp, Jens

(57) **Zusammenfassung**

Ein Anschlussverbinder 1 zum Anschließen eines Rohrendes 17 umfasst einen Grundkörper 2 mit einer Aufnahme zur Aufnahme eines Rohr- oder Schlauchendes 17, einen Klemmkörper 15, der für die Zwecke des Anschlusses des Rohr- oder Schlauchendes 17 an dem Grundkörper 2 auf die Außenseite des Rohr- oder Schlauchendes 17 wirkt. Ferner umfasst der Anschlussverbinder ein zum Beaufschlagen des Klemmkörpers 15 mit der notwendigen Klemmkraft in längsaxialer Richtung bewegbares Betätigungsorgan 7. Das Betätigungsorgan dieses Anschlussverbinders 1 ist nach Art einer gegenüber dem Rohr- oder Schlauchende 17 verschiebbaren Schiebehülse 7 konzipiert. Zudem verfügt der Anschlussverbinder 1 über eine Verriegelungseinrichtung zum Verriegeln der Schiebehülse 7 an dem Grundkörper 2 in seiner auf den Grundkörper 2 aufgeschobenen Stellung.

## Beschreibung

Die Erfindung betrifft einen Anschlussverbinder zum Anschließen eines Rohr- oder Schlauchendes, umfassend einen Grundkörper mit einer Aufnahme zur Aufnahme eines Rohr- oder Schlauchendes, einen Klemmkörper, der für die Zwecke des Anschlusses des Rohr- oder Schlauchendes an den Grundkörper auf die Außenseite des Rohr- oder Schlauchendes wirkt und ein zum Beaufschlagen des Klemmkörpers mit der notwendigen Klemmkraft in längsaxialer Richtung bewegbares Betätigungsorgan.

Derartige Anschlussverbinder sind hinlänglich bekannt. Beschrieben ist ein solcher beispielsweise in US 2003/0197380 A. Der durch diese Druckschrift offenbarte Anschlussverbinder umfasst einen Grundkörper mit einer darin in einer Aufnahme zur Aufnahme eines Rohrendes eingelegten Dichtung in Form eines O-Rings. Zusätzlich ist ein Klemmring vorgesehen, der im montierten Zustand eine radial nach innen gerichtete Anpresskraft auf das Rohrende ausübt. Der Klemmring verhindert im Zusammenspiel mit den übrigen Komponenten des Steckverbinders ein Herausziehen des Rohrendes aus dem Dichtelement im Grundkörper. Als Betätigungsorgan wird bei diesem vorbekannten Anschlussverbinder eine Überwurfmutter verwendet, wobei bei der Montage ein Rohrende durch eine zentrale Durchgangsöffnung geführt wird. In einem nächsten Montageschritt wird die Überwurfmutter mit dem Grundkörper verschraubt und in diesem Zuge in längsaxialer Richtung auf den Grundkörper zu bewegt. Eine radiale Innenwandung der Überwurfmutter ist als konische Stellfläche ausgebildet, die komplementär zu einer hierzu in Wirkverbindung tretenden konischen Stellfläche am Klemmring ist. Aufgrund der konischen Ablaufflächen führt das Aufschrauben der Überwurfmutter am Grundkörper zu einer gleichzeitigen axialen und radialen Kraftbeaufschlagung des Klemmrings, der dadurch gegen das Dichtelement und gegen die Außenwandung des eingeführten Rohrendes gedrückt wird.

Die als Betätigungsorgan bei dem vorbekannten Anschlussverbinder dienende Überwurfmutter verfügt an ihren radialen Außenseiten über Angriffsflächen für ein Werkzeug. Aufgeschraubt wird die Überwurfmutter in aller Regel mit einem vordefinierten Drehmoment, um sicher zu stellen, dass die gewünschte Dichtigkeit erreicht wird. Derartige Anschlussverbinder können in umgekehrter Weise durch Lösen der Überwurfmutter demontiert werden. Bei bestimmten Anwendungsfällen, wie beispielsweise bei einer Verlegung von Fernwärmerohren wird hingegen gefordert, dass derartige Anschlussverbinder nach ihrer Montage unlösbar sind. Ausgehend von diesem diskutierten Stand der Technik liegt der Erfindung daher die Aufgabe zugrunde, einen Anschlussverbinder der eingangs genannten Art dergestalt weiterzubilden, dass dieser den an eine Unlösbarkeit der Verbindung gestellten Anforderungen genügt.

Gelöst wird diese Aufgabe erfindungsgemäß durch einen eingangs genannten, gattungsgemäßen Anschlussverbinder mit den weiteren Merkmalen des Anspruchs 1.

Bei diesem Anschlussverbinder ist das Betätigungsorgan nach Art einer gegenüber dem anzuschließenden Leitungsende - ein Rohr- oder Schlauchende - verschiebbaren Schiebehülse konzipiert. Zudem verfügt der Anschlussverbinder über eine Verriegelungseinrichtung, mit der die Schiebehülse am Grundkörper verriegelbar und damit unlösbar verbindbar ist, wenn sich diese gegenüber dem Grundkörper in ihrer das Leitungsende verklemmenden Position befindet. Im Unterschied zu vorbekannten Anschlussverbindern der gattungsgemäßen Art wird das als Schiebehülse konzipierte Betätigungsorgan des beanspruchten Anschlussverbinders in längsaxialer Richtung bewegt, insbesondere ohne dass dieses notwendigerweise einer Drehbewegung unterworfen wird. Daher ist es möglich, eine Verriegelung zu konzipieren, die in längsaxialer Richtung und damit entgegen der Bewegungsrichtung des Betätigungsorgans wirkt, wenn sich dieses in seiner Klemmposition befindet. Zum Betätigen der Schiebehülse wird ein Werkzeug benötigt, mit dem diese in längsaxialer Richtung bewegt werden kann.

Gemäß einem Ausführungsbeispiel eines solchen Anschlussverbinders ist vorgesehen, dass das nach Art einer Scheibehülse konzipierte Betätigungsorgan über eine in radialer Richtung zum Grundkörper hin offene Riegelnut verfügt. An komplementärer Position verfügt ebenfalls der Grundkörper über eine in radialer Richtung nach außen weisende offene Riegelnut. Jede der beiden Riegelnuten weist eine Tiefe auf, die kleiner ist als ein zur Verriegelung der beiden Körper in längsaxialer Richtung miteinander dienender Riegelkörper. Dieser greift in der verriegelnden Stellung teilweise in die dem Betätigungsorgan zugeordnete Riegelnut und mit einem anderen Teil in die dem Grundkörper zugeordnete Verriegelungsnut ein. Bevorzugt sind die beiden Verriegelungsnuten umlaufend ausgeführt und als Riegelkörper dient ein Sprengring. Zum Einbringen des Sprengringes in die Verriegelungsstellung, in der dieser mit einem Anteil jeweils in die Verriegelungsnut des Betätigungsorgans sowie in diejenige des Grundkörpers eingreift, ist gemäß einer Ausgestaltung vorgesehen, einer der beiden Riegelnuten einen Einsetzabschnitt zuzuordnen. Dieser weist eine gegenüber der Tiefe der Riegelnut größere Tiefe auf. Die Tiefe des Einsetzabschnittes ist geeignet, um den Riegelkörper in seiner radialen Erstreckung aufzunehmen. Unter Ausnutzung der federelastischen Eigenschaften eines solchen als Sprengring ausgeführten Riegelkörpers können sodann die beiden Riegelnuten in ihre in radialer Richtung fluchtende Anordnung gebracht werden, wobei der Sprengring als Riegelkörper bei dem Prozess des Ausrichtens der Riegelnuten zueinander in dem Einsetzabschnitt. Aufgrund seiner Federvorspannung spannt sich dieser, wenn die beiden Riegelnuten in ihre bestimmungsgemäße Verriegelungsposition gebracht worden sind, und greift sodann mit jeweils einem Teil seines Durchmessers in jede der beiden Riegelnuten ein.

Gemäß einer anderen Ausführung ist vorgesehen, dass der Riegelkörper, typischerweise als Sprengring ausgeführt, in der Riegelnut der Schiebehülse gehalten ist. Die Riegelnut der Schiebehülse ist zu diesem Zweck derart ausgeführt, dass diese in axialer Richtung durch jeweils einen typischerweise umlaufenden Flansch begrenzt ist. Der Riegelkörper ist darin unverlierbar gehalten. Der Innendurchmesser des Riegelkörpers in unbelastetem Zustand ist kleiner als der Innendurchmesser der beiden Flansche. Dieser radiale Anteil des Riegelkörpers als Teil desselben dient zum Eingreifen in die komplementäre Riegelnut des Grundkörpers. Der Grundkörper verfügt über einen axialen Stellflansch, der beim Aufschieben der Schiebehülse auf den Grundkörper in den Riegelkörper eingeführt wird und diesen im Zuge des Aufschiebens aufweitet. Die äußere Mantelfläche des Stellflansches geht über in die grundkörperseitige Riegelnut mit dem Ergebnis, dass bei entsprechend weitem Aufschieben der Schiebehülse der Riegelkörper aufgrund seiner Elastizität in die Riegelnut des Grundkörpers einspringt.

Bei einer solchen Ausgestaltung ist es zweckmäßig, wenn der Riegelkörper an seiner zu dem von dem Grundkörper entfernteren, die Riegelnut der Schiebehülse begrenzenden Flansch eine gerade ausgeführte Stirnfläche als Stellfläche aufweist. Diese erstreckt sich vorzugsweise in Querrichtung zur axialen Verschieberichtung. Hierdurch wird ein Verkanten des Riegelkörpers beim Aufschieben desselben auf den Stellflansch verhindert. Der Riegelkörper selbst trägt an seiner inneren, zu dem Grundkörper weisenden Seite vorzugsweise eine Zentrierschräge, wodurch das anfängliche Aufschieben des Riegelkörpers auf den grundkörperseitigen Stellflansch vereinfacht ist.

Eine besonders wirksame Verriegelung zwischen der Schiebehülse und dem Grundkörper stellt sich ein, wenn der Riegelkörper einen in die Riegelnut des Grundkörpers hineinragenden Riegelwulst trägt, der eine von dem Grundkörper wegweisende gerade ausgeführte Stirnfläche als Anschlagfläche aufweist. Die Riegelnut des Grundkörpers ist an ihrer zu der Schiebehülse weisenden Wand komplementär ausgeführt. Auch diese Anschlagfläche ist ebenso wie der entsprechende Abschnitt der Wand der Riegelnut des Grundkörpers gemäß einer möglichen Ausgestaltung in einer Querebene zur Längserstreckung desselben angeordnet. Zweckmäßigerweise trägt der Riegelkörper an seiner zu dem Grundkörper weisenden Stirnseite eine zweite, gerade ausgeführte Stirnfläche als Stellfläche, an der bei einer Druckbeaufschlagung des Anschlussverbinders nebst Leitung die zur Riegelnut weisende Fläche des Abschlussflansches der Schiebehülse zur Anlage gelangt. Bei einer Beanspruchung des Anschlussverbinders, beispielsweise bei unter Druck stehender Leitung, ist so dann eine Bewegung der Schiebehülse und damit des von dieser gehaltenen Rohr- oder Schlauchendes durch die vorbeschriebene Anschlaganordnung wirksam verhindert. Es versteht sich, dass bei dieser Ausgestaltung ein gewisses Spiel in der Verriegelung vorhanden sein kann, bis sich die vorbeschriebene Anschlaganordnung eingestellt hat. Das bedeutet, dass bei einer erstmaligen Druckbeaufschlagung des Anschlussverbinders und der daran angeschlossenen Leitung, wie dieses typischerweise bei einem sogenannten Abdrücken der Fall ist, ein gewisser Verstellbetrag erlaubt bzw. sogar erwünscht wird. Dieses kann genutzt werden, um eine formschlüssige Verriegelung auch in radialer Richtung zwischen Grundkörper und Riegelkörper einerseits und/oder Riegelkörper und Schiebehülse andererseits herbeizuführen. Zu diesem Zweck sind die jeweils komplementären vorbeschriebenen Stell- bzw. Anschlagflächen zur Längsachse des Anschlussverbinders etwas geneigt ausgeführt. Bei einer solchen Ausgestaltung springt der Riegelwulst beim Aufschieben der Schiebehülse in die grundkörperseitige Riegelnut ein. Die vorbeschriebene formschlüssige Verbindung stellt sich allerdings erst ein, wenn die Schiebehülse, beispielsweise hervorgerufen durch ein Abdrücken der Installation, wieder etwas entgegen ihrer axialen Montagerichtung zurückbewegt worden ist.

Die vorbeschriebenen Konzeptionen eignen sich grundsätzlich für Anschlussverbinder, unabhängig davon, wie deren Aufnahme konzipiert ist. So eignet sich ein solcher Anschlussverbinder beispielsweise auch für solche Grundkörper, die über einen Anschlussstutzen zum Aufstecken des anzuschließenden Rohr- oder Schlauchendes verfügen. Dieses ist jedoch nicht zwingend erforderlich. Vielmehr können auch Anschlussverbinder konzipiert werden, die lediglich eine Aufnahme oder Aufnahmebohrung zur Aufnahme des freien Endes einer anzuschließenden Leitung verfügen, ohne dass notwendigerweise ein Abschnitt in das Innere des zu montierenden Leitungsendes eingreift.

Wenn gewünscht, kann in das Betätigungsorgan im Bereich seiner Riegelnut ein Fenster eingebracht sein, damit von außen die bestimmungsgemäße Verriegelungsposition erkennbar ist, die dann vorliegt, wenn durch das Fenster hindurch der typischerweise als Sprengring konzipierte Riegelkörper sichtbar ist.

Die Klemmkörper zum Verklemmen des Rohr- oder Schlauchendes an bzw. innerhalb der grundkörperseitigen Aufnahme können unterschiedlich konzipiert sein. Gemäß einer Ausgestaltung wird als Klemmkörper ein geschlitzter Ringkörper verwendet. Ebenfalls ist es möglich, Klemmkörper einzusetzen, die über einen geschlossenen Ring verfügen, an dem Klemmsegmente in längsaxialer Richtung angeformt sind, die wiederum außenseitig eine Stellschräge jeweils aufweisen.

Vorteile und Weiterbildungen der Erfindung ergeben sich auch aus der nachfolgenden Beschreibung eines Ausführungsbeispiels unter Bezugnahme auf die beigefügten Figuren. Es zeigen:
- **Fig. 1:**: einen Halblängsschnitt nach Art einer Explosionsdarstellung durch einen Anschlussverbinder,
- **Fig. 2:**: der Anschlussverbinder der Figur 1 mit dem daran angeschlossenen Rohrende in einer gegenüber Figur 1 vergrößerten Darstellung,
- **Fig. 3:**: einen Halblängsschnitt nach Art einer Explosionsdarstellung durch einen Anschlussverbinder gemäß einer weiteren Ausgestaltung,
- **Fig. 4:**: der Anschlussverbinder der Figur 3 mit einem daran angeschlossenen Rohrende in einer gegenüber Figur 3 vergrößerten Darstellung,
- **Fig.5:**: ein Halblängsschnitt nach Art einer Explosionsdarstellung durch einen Anschlussverbinder mit Schiebehülsentechnik gemäß noch einer weiteren Ausgestaltung,
- **Fig. 5a:**: die Schiebehülse der Figur 5 in montagefertigem Zustand,
- **Fig.6:**: der Anschlussverbinder der Figur 5 mit einem daran angeschlossenen Rohrende in einer ersten Montagestellung der Schiebehülse und
- **Fig. 7:**: eine Darstellung entsprechend derjenigen der Figur 6 mit der aufgeschobenen und verriegelten Schiebehülse.

Ein nach Art der Schiebehülsentechnik konzipierter Anschlussverbinder 1 verfügt über einen Grundkörper 2, an dem als Aufnahme für ein anzuschließendes Rohr ein Anschlussstutzen 3 angeformt ist. Der Anschlussstutzen 3 trägt an seiner äußeren Mantelfläche mehrere umlaufende Rippen, denen der Zweck von Rückhalte- bzw. Verklammerungselementen zukommt, die gegen die Innenseite eines anzuschließenden Rohres wirken. Im Bereich der Wurzel des Anschlussstutzens 3 befindet sich eine umlaufende Ringnut 4, die zur Aufnahme des anzuschließenden Rohrendes dient. Durch die Ringnut 4 ist eine Anschlagfläche 5 bereitgestellt. Zurückversetzt von der Anschlagfläche 5 in längsaxialer Richtung ist in die Außenseite des Grundkörpers 2 eine umlaufende Nut - eine Riegelnut 6 - eingebracht.

Teil des Anschlussverbinders 1 ist des Weiteren eine Schiebehülse 7 als Betätigungsorgan. Die Schiebehülse 7 verfügt über eine innen liegende Stellschräge 8, die zu dem von dem Grundkörper 2 wegweisenden Ausgang 9 geneigt ist. Der Innendurchmesser im Bereich des Ausganges 9 der Schiebehülse 7 ist mit einem geringen Spiel größer bemessen als der Außendurchmesser eines an den Anschlussverbinder 1 anzuschließenden Rohres.

In Richtung zum Grundkörper 2 vor der Stellschräge 8 ist innenseitig in die Schiebehülse 7 eine Riegelnut 10 umlaufend eingebracht. Die Riegelnut 10 setzt sich fort in einen Einsetzabschnitt 11, der gegenüber der Riegelnut 10 eine größere Tiefe aufweist. Die die Riegelnut 10 in Richtung zum Grundkörper 2 begrenzende Wand weist in Richtung zu dem Grundkörper 2 eine Schräge 12 auf.

Der Schiebehülse 7 zugeordnet ist ein Sprengring 13 als Riegelkörper. Dieser sitzt in der Riegelnut 10 bzw. dem Einsetzabschnitt 11. Die Tiefe des Einsetzabschnitts 11 ist hinreichend groß, damit der Durchmesser des Sprengringes 13 darin aufgenommen werden kann. Die Riegelnut 10 und die Riegelnut 6 des Grundkörpers weisen hingegen nur eine Tiefe auf, die einem Teil des Drahtdurchmessers des Sprengringes 13 entspricht.

Der Anschlussverbinder 1 verfügt des Weiteren über einen Klemmring 14 als Klemmkörper. Der Klemmring 14 ist geschlitzt, wobei die Schlitzweite so bemessen ist, dass bei bestimmungsgemäßem Anschluss eines Rohres an den Anschlussverbinder 1 der Klemmring 14 geschlossen ist, mithin sein Durchmesser reduziert ist. Die radiale Außenseite des Klemmringes 14 ist zumindest teilweise als Stellschräge 15 ausgeführt, welche Stellschräge 15 komplementär zu der Stellschräge 8 der Schiebehülse 7 hinsichtlich seiner Neigung ist. An der Innenseite trägt der Klemmring 14 mehrere Verriegelungsrippen 16.

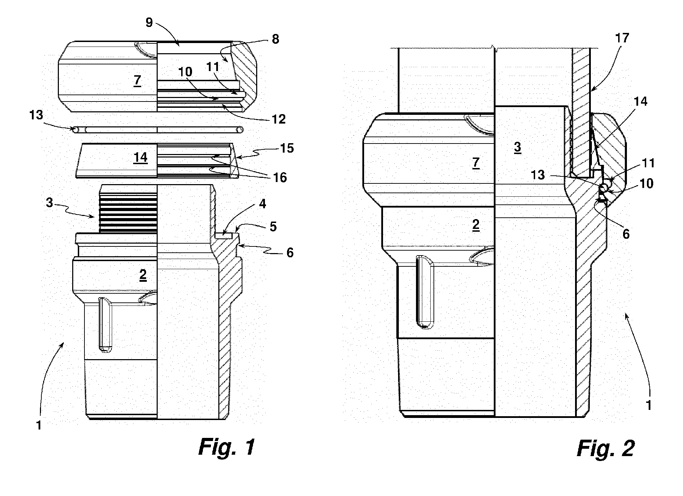

Figur 2 zeigt ein an den Anschlussverbinder 1 angeschlossenes Rohrende 17. Die Innenweite des Rohrendes 17 ist angepasst, damit dieses auf den Anschlussstutzen 3 ohne weiteres aufgeschoben werden kann. Zum Anschließen des Rohrendes 17 an den Anschlussverbinder 1 ist vor Aufschieben des Rohrendes 17 auf den Anschlussstutzen 3 die Schiebehülse 7 auf das Rohrende 17 aufgeschoben worden, und zwar zusammen mit dem Klemmring 14 und dem in der Riegelnut 10 bzw. dem Einsetzabschnitt 11 befindlichen Sprengring 13. Nachdem das Rohrende 17 auf den Anschlussstutzen 3 aufgeschoben und mit seinem Ende in die Ringnut 4 eingeführt ist, wird mit Hilfe eines geeigneten Werkzeuges die Schiebehülse 7 in längsaxialer Richtung zum Grundkörper 2 hin bewegt. Sobald der Klemmring 14 mit seiner zu dem Grundkörper 2 weisenden Vorderseite an der Anschlagfläche 5 zur Anlage gelangt, wird bei sukzessivem Weiterschieben der Schiebehülse 7 durch das Zusammenspiel der beiden Stellschrägen 8, 15 der Durchmesser des Klemmringes 14 verringert. In diesem Zuge wird in radialer Richtung der notwendige Klemmdruck auf das auf dem Anschlussstutzen 3 sitzende Rohrende 17 ausgeübt, wodurch sich sowohl die Rippen des Anschlussstutzens 3 als auch die Verriegelungsrippen 16 des Klemmringes 14 in die Innenwand bzw. die Außenwand des Rohrendes 17 eingraben. Die Bewegung der Schiebehülse 7 in der vorbeschriebenen längsaxialen Richtung zum Grundkörper 2 hin ist beendet, wenn, wie in Figur 2 gezeigt, der Sprengring 13 in die dem Grundkörper 2 zugeordnete Riegelnut 6 aufgrund seiner diesbezüglich federelastisch eingestellten Eigenschaften einspringt. Diese Stellung zwischen Schiebehülse 7 und Grundkörper 2 ist in Figur 2 gezeigt. Deutlich erkennbar greift der Sprengring 13 mit einem Teil seines Durchmessers in die Riegelnut 10 der Schiebehülse 7 und mit einem anderen Teil in die Riegelnut 6 des Grundkörpers 2 ein. Die beiden Riegelnuten 6, 10 sind hinsichtlich ihrer Höhe so konzipiert, dass der Abstand der Sohle der beiden Riegelnuten 6, 10 voneinander dem Durchmesser des Sprengringes 13 entspricht oder um ein gewünschtes Bewegungsspiel größer ist. Eine Bewegung der Schiebehülse 7 aus ihrer in Figur 2 gezeigten Stellung von dem Grundkörper 2 weg ist somit erkennbar durch den Sprengring 13 blockiert. Mithin ist in dieser Stellung die Schiebehülse 7 unlösbar an dem Grundkörper 2 verriegelt. Eine Demontage derselben ist zerstörungsfrei nicht möglich.

Aus der vorstehenden Beschreibung des Anschlussverbinders wird deutlich, dass zum Aufschieben des Rohrendes 17 auf den Anschlussstutzen 3 das Rohr zuvor nicht geweitet werden muss. Daher ist eine Anschlussmontage eines Rohres an den beschriebenen Anschlussverbinder 1 gegenüber den aus der Schiebehülsentechnik ansonsten bekannten Montageschritten vereinfacht.

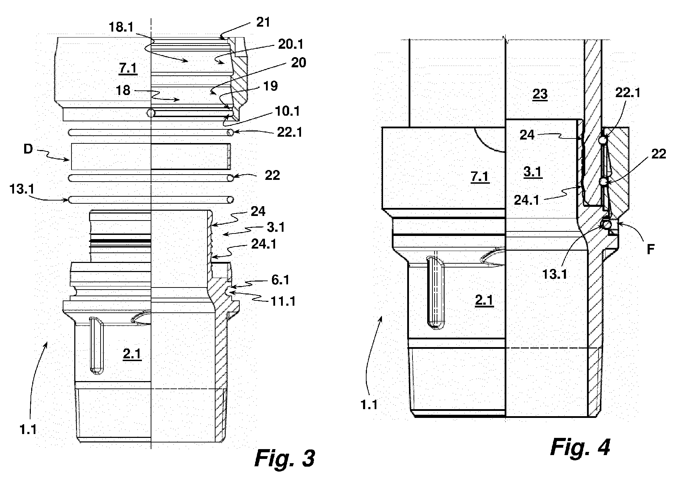

Figuren 3 und 4 zeigen ein weiters Ausführungsbeispiel eines Anschlussverbinders 1.1, der prinzipiell konzipiert ist wie der Anschlussverbinder 1 der Figuren 1 und 2, was die Verriegelung ihrer Schiebehülse 7.1 an dem Grundkörper 2.1 betrifft. Daher gelten die diesbezüglichen Ausführungen zu dem Anschlussverbinder 1 ebenfalls für den Anschlussverbinder 1.1.

Im Unterschied zu der Ausgestaltung des Anschlussverbinders 1 ist bei dem Anschlussverbinder 1.1 der Einsetzabschnitt 11.1 nicht der Riegelnut 10.1 der Schiebehülse 7.1 zugeordnet, sondern der Riegelnut 6.1 des Grundkörpers 2.1. Der Einsetzabschnitt 11.1 befindet sich an der von der Schiebehülse 7.1 wegweisenden Seite der Riegelnut 6.1. In der Schiebehülse 7.1 ist ein Fenster F im Bereich ihrer Riegelnut 10.1 angeordnet, damit von außen kontrolliert werden kann, dass der zur Verriegelung der Schiebehülse 7.1 an dem Grundkörper 2.1 dienende Sprengring 13.1 bestimmungsgemäß in die Riegelnut 10.1 eingreift. Bei dem Anschlussverbinder 1.1 befindet sich der Sprengring 13.1 grundkörperseitig montiert, wenn die Schiebehülse 7.1 auf den Grundkörper 2.1 zum Verriegeln derselben an diesem aufgeschoben wird.

Der Anschlussverbinder 1.1 unterscheidet sich auch von dem Anschlussverbinder 1 hinsichtlich der Konzeption der Schiebehülse 7.1 in Bezug auf die damit bewirkte Rohrverklemmung. Bei dem dargestellten Ausführungsbeispiel verfügt die Schiebehülse 7.1 über zwei Klemmringkammern 18, 18.1. Die Klemmringkammer 18 weist eine umlaufende Stellschräge 20 auf, deren Neigung ausgehend von einem die Stellschräge 20 an ihrem in Richtung zum Grundkörper 2.1 weisenden Ende befindlichen Absatz 19 von dem Grundkörper 2.1 weg in Richtung zur Längsachse gerichtet ist. Die Klemmringkammer 18.1 verfügt ebenfalls über eine Stellschräge 20.1. Die Länge der beiden Klemmringkammern 18, 18.1 in axialer Richtung ist gleich. Der Innendurchmesser der Stellschrägen 20, 20.1 an der Stelle ihrer größten Verjüngung ist gleich. Die Klemmringkammer 18.1 ist rückwärtig durch einen in radialer Richtung nach innen vorspringenden Flansch 21 begrenzt.

Jeder Klemmringkammer 18 bzw. 18.1 der Schiebehülse 7.1 ist ein Klemmring 22, 22.1 zugeordnet. Bei den Klemmringen 22, 22.1 handelt es sich um Sprengringe, mithin um offene Ringe, die gegen ihre Rückstellkraft bezüglich ihres Durchmessers verkleinert werden können. Zwischen den beiden Klemmringen 22, 22.1 befindet sich eine Distanzhülse D. Die Klemmringe 22, 22.1 sind in der jeweiligen Klemmringkammer 18 bzw. 18.1 gehalten, und zwar dadurch, dass diese unter einer gewissen Vorspannung stehend sich in einer Ausgangsstellung an der Stellschräge 20 bzw. 20.1 im Bereich mit ihrem größten Durchmesser abstützen. Mithin liegt der Klemmring 22 mit seiner radialen Außenseite an der Stellschräge 20 anliegend und der Klemmring 22.1 mit seiner Außenseite gegen die Stellschräge 20.1 wirkend und an der zu der Klemmringkammer 18 weisenden Wand an. Die Distanzhülse D befindet sich zwischen den beiden Klemmringen 22, 22.1 und stößt an beide Klemmringe 22, 22.1.

Der Anschlussstutzen 3.1 des Anschlussverbinders 1.1 weist an seiner Außenseite zwei konkave muldenförmige Vertiefungen 24, 24.1 auf. Die Vertiefungen 24, 24.1 befinden sich in Bezug auf die Längsersteckung des Anschlussstutzens 3.1 an Positionen, an denen sich die beiden Klemmringe 22, 22.1 der Schiebehülse 7.1 befinden, wenn die Schiebehülse 7.1 mit dem Grundkörper 2.1 verbunden ist. Da die Klemmringe 22, 22.1 gegen die äußere Mantelfläche des anzuschließenden Rohr- oder Schlauchendes wirken und der Anschlussstutzen 3.1 das Widerlager hierzu bildet, wird bei dem Ausführungsbeispiel der Figur 3 das Rohr- oder Schlauchende durch die Klemmringe 22, 22.1 in die Vertiefungen 24 bzw. 24.1 eingedrückt.

Figur 4 zeigt ein auf den Anschlussstutzen 3.1 aufgestecktes Rohrende 23 mit der am Grundkörper 2.1 verriegelten Schiebehülse 7.1. Die beiden Klemmringe 22, 22.1 befinden sich in ihrer auf die Außenseite des Rohrendes 23 einwirkenden und sich darin eingrabenden Stellung. Erkennbar ist, dass durch diese radiale Krafteinwirkung das Rohrende 18 in die Vertiefungen 24, 24.1 eingedrückt wird. Dieses gewährleistet eine besondere Dichtigkeit des an den Anschlussverbinder 1.1 angeschlossenen Rohrendes 23. Der als Riegelkörper dienende Sprengring 13.1 greift zur Verriegelung der Schiebehülse 7.1 mit einem Teil seines Durchmessers in die der Schiebehülse 7.1 zugeordnete Riegelnut 10.1 und mit seinem anderen Teil in den Einsetzabschnitt 11.1 bzw. die Riegelnut 6.1 ein. Um für einen Monteur die bestimmungsgemäße Verriegelung der Schiebehülse 7.1 an dem Grundkörper 2.1 erkennbar zu machen, ist in die Schiebehülse 7.1 im Bereich ihrer Riegelnut 13.1 ein Fenster F eingebracht. Die Erstreckung des Fensters F in Längsersteckung ist geringfügig größer als der diesbezügliche Durchmesser des Sprengringes 13.1.

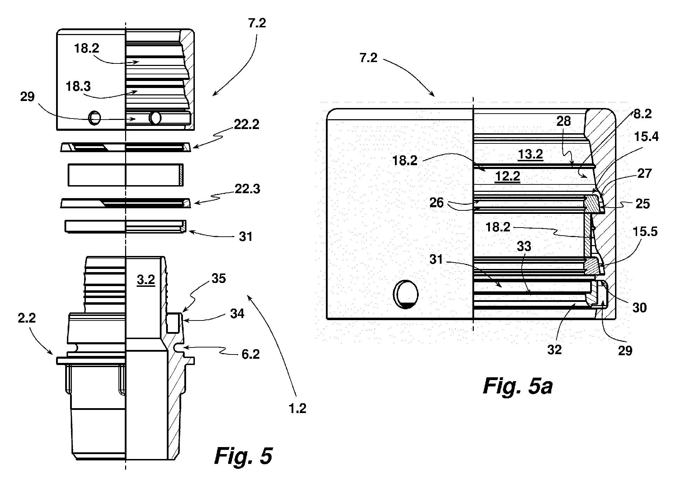

Figur 5 zeigt ein weiteres Ausführungsbeispiel eines Anschlussverbinders 1.2, der prinzipiell aufgebaut ist wie der Anschlussverbinder 1.1. Daher ist im Folgenden vornehmlich auf die Unterschiede des Anschlussverbinders 1.2 gegenüber dem Anschlussverbinder 1.1 eingegangen:
Der Anschlussverbinder 1.2 unterscheidet sich von dem Anschlussverbinder 1.1 zum einen durch die Ausgestaltung seiner auf das auf den Anschlussstutzen 3.2 aufgesetzte Rohr- und/oder Schlauchende wirkenden Klemmringe 22.2, 22.3. Beide Klemmringe 22.2 und 22.3 sind identisch aufgebaut. Im Folgenden ist der Klemmring 22.2 näher beschrieben. Der Klemmring 22.2 weist eine im Wesentlichen trapezförmige Querschnittsgeometrie auf. Seine in radialer Richtung nach außen weisende Mantelfläche ist in Richtung zu dem von dem Grundkörper 2.2 wegweisenden Ende konisch verjüngt. Mithin bildet die äußere Mantelfläche eine Stellschräge 25 auf. Die Neigung der Stellschräge 25 ist komplementär zu der Neigung der Stellschräge 20.2 der den Klemmring 22.2 aufnehmenden Klemmringkammer 18.2. Die nach innen weisende Seite des Klemmringes 22.2 trägt Verklammerungsstrukturen 26, die sich beim Festsetzen eines Rohr- und/oder Schlauchendes in die Außenseite desselben eindrücken. Mit seiner Stellschräge 25 liegt der Klemmring 22.2 flächig an der Stellschräge 20.2 der Schiebehülse 7.2 an. In der der Figur 5a gezeigten Montagestellung des Klemmringes 22.2, in welcher Stellung die Schiebehülse 7.2 montagefertig ist und auf das festzusetzende Rohr- oder Schlauchende aufgeschoben wird, befindet sich dieser in einer Montagekammer 27, deren Innendurchmesser größer ist als der Außendurchmesser des Klemmringes 22.2 in unbelastetem Zustand. Dieses gewährleistet ein notwendiges Spiel, damit der Klemmring 22.2 nach außen ausweichen kann, wenn der Rohrdurchmesser etwas größer ist als der Innendurchmesser desselben in unbelastetem Zustand. Die eigentliche Stellschräge 20.2 der Schiebehülse 7.2 beginnt am Ausgang der Montagekammer 27. Die Stellschräge 20.2 der Schiebehülse 7.2 grenzt an ihrem anderen Ende an eine Riegelnut, die dieselbe Neigung wie die Stellschräge 20.2 aufweist. Die Riegelnut ist gegenüber dem verjüngten Ende der Stellschräge 20.2 zurückversetzt und bildet mit dem zur der Riegelnut weisenden Ende der Stellschräge 20.2 einen Anschlagabsatz 28 aus. Der Anschlagabsatz 28 selbst erstreckt sich umlaufend in radialer Richtung. Beim Verriegeln der Schiebehülse 7.2 mittels des Klemmringes 22.2 an der äußeren Mantelfläche eines auf den Anschlussstutzen 3.2 aufgesetzten Rohr- oder Schlauchendes springt der Klemmring 22.2 nach entsprechendem Aufschieben der Schiebehülse 7.2 in die Riegelnut ein und liegt mit seiner zu dem Grundkörper 2.2 weisenden Stirnseite an dem Anschlagabsatz 28 an. Da die diese Fläche des Klemmringes 22.2 mit der Stellschräge 25 verbindende Kante einen sehr kleinen Radius aufweist, ist es zur wirksamen Verriegelung des Klemmringes 22.2 in der Regel ausreichend, wenn die Höhe des Anschlagabsatzes 28 nur ein Bruchteil eines Millimeters, etwa 0,1 oder 0,2 Millimeter beträgt.

Die Klemmringkammer 18.3, in der der zweite Klemmring 22.3 angeordnet ist, ist ebenso konzipiert und verfügt ebenfalls über eine gleichermaßen konzipierte Riegelnut, wie dieses bezüglich der Klemmringkammer 18.2 beschrieben ist.

Der Anschlussverbinder 1.2 unterscheidet sich von dem Anschlussverbinder 1.1 auch durch die Art der Verriegelung seiner Schiebhülse 7.2 am Grundkörper 2.2. Während bei dem Anschlussverbinder 1.1 ein Sprengring 13.1 zum formschlüssigen Verriegeln der Schiebehülse 7.1 an dem Grundkörper 2.1 von dem Grundkörper 2.1 getragen ist, ist dieses beim Gegenstand des Anschlussverbinders 1.2 anders. Die Schiebehülse 7.2 verfügt über eine Riegelnut 29, die durch einen Stellflansch 30 von der in Bezug zu dem Grundkörper 2.2 nähern Klemmringkammer 18.3 getrennt ist. Die Riegelnut 29 dient zur Aufnahme eines nach Art eines Sprengringes konzipierten Riegelringes 31. Der Riegelring 31 ist in der Riegelnut 29 unverlierbar aufgenommen. Dabei sind der Stellflansch 30 in Bezug auf seine radiale Erstreckung nach innen und die zu dem Stellflansch 30 weisende Stirnfläche des Riegelringes 31 so aufeinander abgestimmt, dass der Riegelring 31 umlaufend wenigstens mit einem Abschnitt der radialen Erstreckung seiner Stirnfläche an der zu dem Riegelring 31 weisenden Oberfläche des Stellflansches 30 anliegt. Der Riegelring 31 verfügt an seiner zu dem Grundkörper 2.2 weisenden Innenseite über eine Zentrierschräge 32. An seiner wiederum zu dem Stellflansch 30 weisenden Seite trägt der Riegelring 31 einen wulstartig nach innen abragenden Absatz 33 mit einer zu dem Stellflansch 30 weisenden Anschlagfläche. Der Grundkörper 2.2 verfügt an seinem freien Ende eines Stellringes 34 über eine Fase 35, die komplementär zu der Zentrierschräge 32 des Riegelringes 31 ausgeführt ist. Ebenso wie der Anschlussverbinder 1.1 verfügt der Grundkörper 2.2 des Anschlussverbinders 1.2 über eine Riegelnut 6.2, in die zur Verriegelung der Schiebehülse 7.2 an dem Grundkörper 2.2 der Riegelring 31 einspringt, wenn die Schiebehülse 7.2 entsprechend weit genug auf den Grundkörper 2.2 aufgeschoben ist.

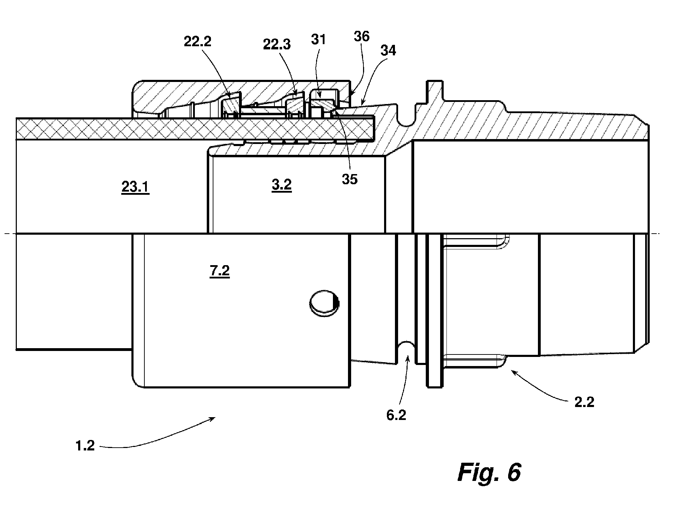

Figur 6 zeigt den Anschlussverbinder 1.2 mit seiner Schiebehülse 7.2 in einer Zwischenmontagestellung, bei der auf den Anschlussstutzen 3.2 bereits ein Rohrende 23.1 aufgeschoben ist. Die Schiebehülse 7.2 ist manuell in diese Montagestellung aufgeschoben worden. Durch weiteres Aufschieben der Schiebehülse 7.2 in Richtung zum Grundkörper 2.2 wird der Riegelring 31 an der Fase 35 des dem Grundkörper 2.2 zugeordneten Stellringes 34 aufgeweitet. Bei weiterem Aufschieben gelangt das freie Ende des Stellringes 34 an die zum Grundkörper 2.2 weisende Stirnseite des Klemmringes 22.3. In dieser Stellung der Schiebehülse 7.2 in Bezug auf den Grundkörper 2.2 befinden sich die Klemmringe 22.2 und 22.3 jeweils an ihrer bestimmungsgemäßen Klemmposition in Bezug auf die äußere Mantelfläche des Anschlussstutzens 3.2. Beim weiteren Aufschieben der Schiebehülse 7.2 werden die Klemmringe 22.2, 22.3 an den jeweiligen Stellschrägen 20.2 unter Verringerung ihres Innendurchmessers gegen die Außenseite des Rohrendes 23.1 gedrückt, wobei sich die Verklammerungsstrukturen 26 in die Außenseite des Rohrendes 23.1 eindrücken und auf diese Weise eine formschlüssige Verbindung mit dem Rohrende 23.1 eingehen. Ist die Schiebehülse 7.2 weit genug aufgeschoben, springen die Klemmringe 22.2 und 22.3 in die jeweils an die Stellschrägen 20.2 grenzenden Riegelnuten ein, wodurch die Schiebehülse 7.2 formflüssig an das Rohrende 23.1 angeschlossen und die Schiebehülse 7.2 gegen ein Abziehen verriegelt ist.

Im Zuge der vorbeschriebenen Bewegung ist auch der Riegelring 31 über die Außenseite des Stellringes 34 hinweg bewegt worden und greift mit seinem Absatz 33 in die Riegelnut 6.2 des Grundkörpers 2.2 ein. Dabei dient die zu der Klemmringkammer 18.3 der Schiebehülse 7.2 weisende Fläche des Absatzes 33 des Riegelringes 31 als umlaufende Riegelfläche, die gegen die zum Anschlussstutzen 3.2 weisende Wand der Riegelnut 6.2 wirkt.

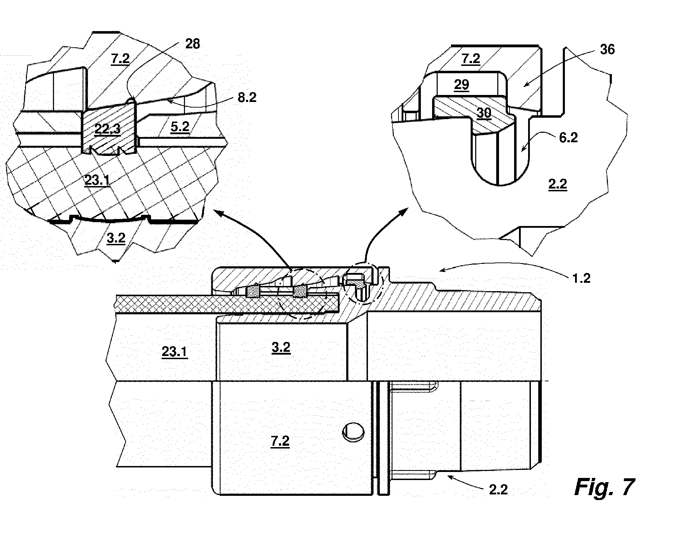

Die Riegelnut 29 trägt vorderseitig einen Abschlussflansch 36, der über die zum Grundkörper 2.2 weisende Stirnseite des Riegelringes 31 ragt. Aus diesem Grunde wird bei einer Beanspruchung der Rohrverbindung entgegen der Montagebewegung, etwa bei einer ersten Druckbeaufschlagung - einem so genannten Abdrücken - der Riegelring 31 in seine in Figur 7 gezeigte Anschlaganordnung gebracht. Damit ist die Schiebehülse 7.2 auch durch den Riegelring 31 sicher an dem Grundkörper 2.2 verriegelt.

Bei dem beschriebenen Ausführungsbeispielen der Anschlussverbinder 1.1, 1.2 ist die Schiebehülse durch zwei unterschiedliche Maßnahmen gegen ein Abziehen verriegelt. Es versteht sich, dass eine Verriegelung der Schiebehülse auch nur mit einer der beiden Maßnahmen möglich ist.

Die Erfindung ist anhand von Ausführungsbeispielen beschrieben worden. Ohne den Umfang der Ansprüche zu verlassen, ergeben sich für einen Fachmann zahlreiche weitere Ausgestaltungen, die Erfindung realisieren zu können, ohne dass dieses im einzelnen dargelegt werden müsste. Gleichwohl zählen auch diese weiteren Ausgestaltungen zum Offenbarungsgehalt dieser Ausführungen.

### Bezugszeichenliste

- 1, 1.1, 1.2: Anschlussverbinder
- 2, 2.1, 2.2: Grundkörper
- 3, 3.1, 3.2: Anschlussstutzen
- 4: Ringnut
- 5: Anschlagfläche
- 6, 6.1, 6.2: Riegelnut
- 7, 7.1, 7.2: Schiebehülse
- 8: Stellschräge
- 9: Ausgang
- 10, 10.1, 10.2: Riegelnut
- 11, 11.1: Einsetzabschnitt
- 12: Schräge
- 13, 13.1: Sprengring
- 14: Klemmring
- 15: Stellschräge
- 16: Verriegelungsrippen
- 17: Rohrende
- 18, 18.1, 18.2, 18.3: Klemmringkammer
- 19: Absatz
- 20, 20.1, 20.2: Stellschräge
- 21: Flansch
- 22, 22.1, 22.2, 22.3: Klemmring
- 23, 23.1: Rohrende
- 24,24.1: Vertiefung
- 25: Stellschräge
- 26: Verklammerungsstruktur
- 27: Montagekammer
- 28: Anschlagabsatz
- 29: Riegelnut
- 30: Stellflansch
- 31: Riegelring
- 32: Zentrierschräge
- 33: Absatz
- 34: Stellring
- 35: Fase
- 36: Abschlussflansch

- D: Distanzhülse
- F: Fenster

## Patentansprüche

1. Anschlussverbinder zum Anschließen eines Rohrendes (17, 23, 23.1), umfassend einen Grundkörper (2, 2.1, 2.2) mit einer Aufnahme zur Aufnahme eines Rohr- oder Schlauchendes (17, 23, 23.1), einen Klemmkörper (15; 22, 22.1; 22.2, 22.3), der für die Zwecke des Anschlusses des Rohr- oder Schlauchendes (17, 23, 23.1) an den Grundkörper (2, 2.1, 2.2) auf die Außenseite des Rohr- oder Schlauchendes (17, 23, 23.1) wirkt und ein zum Beaufschlagen des Klemmkörpers (15; 22, 22.1; 22.2, 22.3) mit der notwendigen Klemmkraft in längsaxialer Richtung bewegbares Betätigungsorgan (7, 7.1, 7.2), **dadurch gekennzeichnet, dass** das Betätigungsorgan nach Art einer gegenüber dem Rohr- oder Schlauchende (17, 23, 23.1) verschiebbaren Schiebehülse (7, 7.1, 7.2) konzipiert ist und dass der Anschlussverbinder (1, 1.1, 1.2) über eine Verriegelungseinrichtung zum Verriegeln der Schiebehülse (7, 7.1, 7.2) an dem Grundkörper (2, 2.1, 2.2) in seiner auf den Grundkörper (2, 2.1, 2.2) aufgeschobenen Stellung verfügt.

2. Anschlussverbinder nach Anspruch 1, **dadurch gekennzeichnet, dass** die Verriegelungseinrichtung eine der Schiebehülse (7, 7.1, 7.2) zugeordnete, in radialer Richtung zum Grundkörper (2, 2.1, 2.2) hin offene Riegelnut (10, 10.1), in die ein Teil eines ringförmigen, nach Art eines Sprengringes ausgeführten Riegelkörpers (13, 13.1, 31) zum Verriegeln der Schiebehülse (7, 7.1, 7.2) an dem Grundkörper (2, 2.1, 2.2) eingreift, der Grundkörper (2, 2.1, 2.2) eine komplementäre in radialer Richtung nach außen weisend offene Riegelnut (6, 6.1, 6.2) zur Aufnahme eines weiteren Teils des Riegelkörpers (13, 13.1, 31) und einen Riegelkörper (13, 13.1, 31) umfasst.

3. Anschlussverbinder nach Anspruch 2, **dadurch gekennzeichnet, dass** entweder die Riegelnut (10, 10.1) der Schiebehülse (7, 7.1) oder die Riegelnut (6, 6.1) des Grundkörpers (2, 2.1) über einen gegenüber der jeweiligen Riegelnut (6, 10; 6.1, 10.1) tieferen und in diese übergehenden Einsetzabschnitt (11, 11.1) verfügt.

4. Anschlussverbinder nach Anspruch 3, **dadurch gekennzeichnet, dass** der Einsetzabschnitt (11) der Riegelnut (10) der Schiebehülse (7) zugeordnet ist.

5. Anschlussverbinder nach einem der Ansprüche 1 bis 4, **dadurch gekennzeichnet, dass** der Grundkörper (2, 2.1, 2.2) über einen Anschlussstutzen (3, 3.1, 3.2) zum Aufschieben eines Rohr- oder Schlauchendes (17, 23, 23.1) verfügt.

6. Anschlussverbinder nach einem der Ansprüche 1 bis 5, **dadurch gekennzeichnet, dass** der Klemmkörper (14; 22.2, 22.3) ein geschlitzter Ringkörper mit einer Stellschräge (15, 25) an seiner Außenseite ist, welche Stellschräge (15, 25) von dem Grundkörper (2, 2.2) wegweisend zur Längsachse geneigt ist, und wobei die Schiebehülse (7, 7.2) innenseitig eine komplementäre Stellschräge (8, 20.2) aufweist, damit durch eine Bewegung derselben in längsaxialer Richtung auf den Grundkörper (2, 2.2) zu der Durchmesser des Klemmkörpers (14; 22.2, 22.3) verringert wird.

7. Anschlussverbinder nach Anspruch 6, **dadurch gekennzeichnet, dass** der Klemmkörper (14; 22.2, 22.3) an seiner radialen Innenseite Verklammerungsmittel (16, 26), beispielsweise Verklammerungswülste oder -rippen trägt.

8. Anschlussverbinder nach Anspruch 2 oder 5 bis 7 in ihrem Rückbezug auf Anspruch 2, **dadurch gekennzeichnet, dass** der Riegelkörper (31) in der Riegelnut (29) der Schiebehülse (7.2) gehalten ist und an seiner in axialer Richtung von dem Grundkörper (2.2) wegweisenden Seite eine gerade ausgeführte Stirnfläche als Stellfläche aufweist.

9. Anschlussverbinder nach Anspruch 8, **dadurch gekennzeichnet, dass** der Riegelkörper (31) an seiner zu dem Grundkörper (2.2) weisenden Innenseite eine Zentrierschräge (32) trägt und der Grundkörper (2.2) einen zur Schiebehülse (7.2) weisenden Stellring (34) mit einer sich zu seinem freien Ende hin verjüngenden äußeren Mantelfläche umfasst, wobei der Riegelkörper (31) mit seiner Zentrierschräge (32) und der Stellring (34) derart aufeinander abgestimmt ausgeführt sind, damit der Riegelkörper (31) beim Aufschieben der Schiebehülse (7.2) auf den Grundkörper (2.2) auf den Stellring (34) des Grundkörpers (2.2) aufgeschoben und in diesem Zuge aufgeweitet wird.

10. Anschlussverbinder nach Anspruch 9, **dadurch gekennzeichnet, dass** die Riegelnut (29) durch einen Stellflansch (30) an ihrem von dem Grundkörper (2.2) wegweisenden Ende begrenzt ist, welcher Stellflansch (30) über eine zu der Stellfläche des Riegelkörpers (31) komplementäre Stellfläche verfügt, an der der Riegelkörper (31) beim Aufschieben der Schiebehülse (7.2) auf den Grundkörper (2.2) mit seiner Stellfläche anliegt.

11. Anschlussverbinder nach einem der Ansprüche 8 bis 10, **dadurch gekennzeichnet, dass** der Riegelkörper (31) an seiner Innenseite von seiner Stellfläche zum Grundkörper (2.2) hin beabstandet einen in radialer Richtung nach innen abragenden Riegelwulst (33) mit einer von dem Grundkörper (2.2) wegweisenden Riegelfläche trägt.

12. Anschlussverbinder nach Anspruch 11, **dadurch gekennzeichnet, dass** die Zentrierschräge (32) an der zum Grundkörper (2.2) weisenden Vorderseite des Riegelwulstes (33) angeordnet ist.

13. Anschlussverbinder nach einem der Ansprüche 8 bis 12, **dadurch gekennzeichnet, dass** der Riegelkörper (31) an seiner zum Grundkörper (2.2) weisenden Seite eine gerade ausgeführte Stirnfläche als Stellfläche aufweist und die Schiebehülse (7.2) als Begrenzung der Riegelnut (29) in axialer Richtung zum Grundkörper (2.2) hin einen Abschlussflansch (36) mit einer zu der genannten Stellfläche komplementären Anschlagfläche trägt.
